# EUROPEAN PATENT SPECIFICATION

(11) **EP 3 067 377 B1**
(45) Date of publication and mention of the grant of the patent: **18.01.2023**
(21) Application number: 15158787.0
(22) Date of filing: 12.03.2015
(51) Int. Cl.: C08G 18/48, C08G 18/76, C08G 18/32, C08G 18/12, C09J 175/08, B32B 37/12

(54) **ULTRALOW MONOMER POLYURETHANES**
POLYURETHANE MIT ULTRAGERINGEM MONOMERANTEIL
POLYURÉTHANES À TRÈS FAIBLE TENEUR EN MONOMÈRE

(43) Date of publication of application: 14.09.2016
(73) Proprietor: Henkel AG & Co. KGaA, 40589 Düsseldorf (DE)
(72) Inventor: Pela, Roberto, 40215 Düsseldorf (DE); Kinzelmann, Hans-Georg, 50259 Pulheim (DE); Wang, Yongxia, Bridgewater, NJ 08807 (US); Kamm, Thomas, 51105 Köln (DE)

(56) References cited:
- EP-A1- 3 116 930
- EP-A2- 0 118 065
- WO-A1-00/04069
- WO-A1-03/022901
- WO-A1-03/051951
- WO-A1-2014/187508
- DE-A1- 4 041 753
- US-A- 3 627 722
- US-A- 5 147 927
- US-A- 5 880 167
- US-A1- 2004 084 138
- US-A1- 2008 236 449
- US-A1- 2012 328 888
- US-B1- 6 280 561
- US-B1- 6 515 164

## Description

The present invention is directed to an ultralow monomer polyurethane prepolymer containing free NCO groups obtainable from polyols, diisocyanates and NCO-reactive compounds, to its production and to its use.

Laminating adhesives for bonding film-shaped substrates are commonly known in the field and are for example widely used for packaging applications. They are solvent-containing or solvent-free, crosslinking or physically setting adhesives which serve to bond thin, two-dimensional substrates, such as for example plastics films, metal foils, textiles, paper or cardboard, to one another. It is here essential that the adhesive bond only slightly reduces the flexibility of the thin individual plies. Selection of the individual film plies makes it possible to influence specific characteristics of these multilayer films, in particular permeability to water or other liquids, chemical resistance, permeability to oxygen or other gases.

Foodstuffs in solid, pasty or liquid form may, for example, be packaged in such packages. Everyday items, for example plastic cutlery, may also be packaged. Such packaging is also suitable for holding medical materials or articles.

Adhesives based on reactive polyurethanes have proven particularly successful in practice. For example, DE 10 2004 018048 describes PU adhesives that can be manufactured on the basis of PU prepolymers having terminal isocyanate groups. These prepolymers comprise terminal isocyanate groups and are usable for adhesive bonding of films to yield multi-layer composite materials.

The above-stated fields of application mean that as far as possible no low molecular weight substances should migrate out of the packaging into the package contents. Such substances may be flavor-impairing substances or may have a deleterious effect on health if ingested. In the case of films bonded with polyurethanes, such substances may in particular comprise breakdown products from the isocyanate precursors used, for example from the hydrolyzed polyisocyanates. Primary amines, in particular primary aromatic amines, may here be formed from such polyisocyanate precursors. These are known to impair health. There are accordingly various standards which specify a maximum content of such primary aromatic amines in films suitable for packaging.

It is conventional to use low molecular weight isocyanates in the synthesis of polyurethane adhesives. For chemical reasons, it is impossible to prevent small proportions of monomeric isocyanates from also being present in the adhesive. In a further group of polyurethane adhesives, oligomeric isocyanates are added to the adhesive to improve specific characteristics. These are intended to react with crosslinking agents, for example polyols, or with water, in order to yield a cross-linked adhesive. In this case too, proportions of oligomeric isocyanates remain in the adhesive after bonding. When such objects are exposed to moisture over extended storage, it is known that such isocyanate groups react and, since only small proportions of isocyanate groups are present, these groups are then consumed by reaction to yield amino groups. Over time, such primary amines may then migrate into their surroundings. This is in particular the case with low molecular weight hydrolysis products.

Such migrated substances are unwanted, particularly in the packaging sector, specifically in foodstuffs packaging. In order to avoid the above-stated disadvantages, several technical solutions have been developed.

EP-A 0 118 065 proposes producing polyurethane prepolymers in a two-stage process, in which, in a first stage, a monocyclic diisocyanate is initially reacted with a polyfunctional alcohol and then, in a second step, a diisocyanate is reacted with polyfunctional alcohols with an excess of isocyanate in the presence of the prepolymer produced in the first step. The mixture produced in this manner has a reduced content of monomeric isocyanates.

EP-A 0 150 444 relates to a process for the production of polyurethane prepolymers that have a reduced content of monomeric aromatic isocyanates. They are produced by a process in which in a first reaction step, toluene-2,4-diisocyanate is reacted with polyhydric alcohols in an OH:NCO ratio of 4 to 0.55:1 in the absence of other diisocyanates and, after virtually all the NCO groups of relatively high reactivity have reacted off with some of the OH groups present, a symmetrical dicyclic diisocyanate, which is more reactive than the NCO groups of the toluene-2,4-diisocyanate from reaction step 1, is added in a second reaction step in an equimolar quantity or in excess, based on free OH groups, or in a quantity of 5 to 80% by weight, based on the total quantity of diisocyanates in steps 1 and 2, optionally at elevated temperature and/or in the presence of typical catalysts. Although this known PU prepolymer has a low monomer content, i.e. only 1 to 2.5% according to the Examples, it does not cure sufficiently quickly in many cases.

EP-A 0 951 493 and the corresponding granted US patent US 6,515,164 B1 relate to a low-monomer PU prepolymer containing free NCO groups which is obtainable from polyhydric alcohols and at least two diisocyanates differing in their reactivity and which is characterized in that the ratio of the NCO groups of the partly slower-reacting diisocyanate to the NCO groups of the faster-reacting diisocyanate is greater than 6:1. Said low-monomer PU prepolymers allow quicker but sufficiently safe processing compared to those known from EP-A 0 150 444.

US 2004/084138 A1 discloses a reactive adhesive with low monomer content and multistage hardening. The reactive adhesive is a mixture of a polyurethane prepolymer (A) with a low content of monomeric isocyanate and having at least one functional group reactive with a composition containing at least one acidic hydrogen atom and at least one compound (B) containing a functional group polymerizable by irradiation. WO 03/051951 A1 discloses a process for producing polyurethane prepolymers with low content of monomers. EP 0118065 A2 also discloses another process for preparing polyurethane prepolymers with terminal isocyanate groups and reduced residual monomer content. DE 4041753 A1 discloses a reactive contact adhesive and a process for its production. US 2008/236449 A1 discusses dual-crosslinkable waterborne urethane coating compositions including silanol functionality.

However, the known prepolymers still have drawbacks in that despite their low monomer concentration they typically require a few days cure time at room temperature to comply with food packaging regulations. The cure time is even longer if 1K systems are used, i.e. such prepolymers are not combined with a hardener component upon use.

The object of the present invention is therefore to provide a multilayer laminate comprising two or more substrates selected from the group consisting of plastic surface articles, metals, textiles, paper and cardboard, comprising an adhesive composition, comprising an ultralow-monomer PU prepolymer containing free NCO groups, which allows quicker processing without impairing its adhesive performance, in particular when used with ink-printed films in food packaging applications. The ultralow-monomer PU prepolymers shall in particular suitable for the manufacture of instantly food compliant laminates, such that a storage of the laminates and a complete curing reaction of the prepolymers is not necessary before further use in food packaging application. A high level of consumer safety shall be provided already before the ultralow-monomer PU prepolymer composition is completely cured, i.e. it is desired that the primary aromatic amine (PAA) migration limit of <10 ppb by weight in accordance with EC10/2011 (Commission Regulation (EU) No 10/2011) be achieved directly after lamination. Nevertheless, the ultralow-monomer PU prepolymers shall provide an isocyanate content, which is sufficient to obtain good adhesive properties. The prepolymers can be employed in one-component systems (1K) and two-component systems (2K). Moreover, the prepolymers shall ensure a robust lamination process, i.e. the laminates shall be instantly food compliant even in case of variations in the mixing ratio of the two components.

The present invention meets this object by providing, in a first aspect, a multilayer laminate comprising two or more substrates selected from the group consisting of plastic surface articles, metals, textiles, paper and cardboard, comprising an adhesive composition an adhesive composition, which further comprises a prepolymer composition comprising at least one polyurethane prepolymer containing free isocyanate groups, said polyurethane prepolymer containing less than 1 % by weight free isocyanate monomers and being obtainable by
(a) reacting at least one polyol with at least one polyisocyanate, wherein the at least one polyisocyanate is used in an amount such that the NCO groups are present in molar excess relative to the hydroxyl groups of the at least one polyol to obtain a polyurethane prepolymer containing free isocyanate groups; and
(b) adding at least one compound having at least one H-acidic functional group, wherein at least one compound having at least one H-acidic functional group comprises at least one silane group, to the polyurethane prepolymer containing free isocyanate groups of step (a) in an amount such that the molar ratio of the free isocyanate groups to H-acidic functional groups (NCO:XH ratio) is 2 to 15,
wherein the adhesive composition is liquid at room temperature and
wherein at least one of the two or more substrates is a film-shaped substrate.

In another aspect, not according to the invention, it is disclosed a method for producing the prepolymer composition described herein, comprising
(a) reacting at least one polyol with at least one polyisocyanate, wherein the at least one polyisocyanate is used in an amount such that the NCO groups are present in molar excess relative to the hydroxyl groups of the at least one polyol to obtain a polyurethane prepolymer containing free isocyanate groups; and
(b) adding at least one compound having at least one H-acidic functional group, wherein at least one compound having at least one H-acidic functional group comprises at least one silane group, to the polyurethane prepolymer containing free isocyanate groups of step (a) in an amount such that the molar ratio of the free isocyanate groups to H-acidic functional groups (NCO:XH ratio) is 2 to 15, preferably 2.5 to 10, more preferably 3 to 8.

In yet another aspect, not according to the invention, it is disclosed an adhesive composition comprising the prepolymer composition according to the invention and optionally further comprising at least one tackifier, catalyst, stabilizer, crosslinking agent, viscosity modifier, filler, pigment, plasticizer, water scavenger and/or antioxidant.

A still further aspect, not according to the invention, it is disclosed a method of bonding two or more substrates selected from the group consisting of plastic surface articles, metals, textiles, paper and cardboard comprising:
(a) applying the adhesive composition described herein alone or in a mixture with a hardener, to the surface of at least one of the substrates to be bonded; and
(b) contacting the surfaces of the substrates to be bonded together with the adhesive composition therebetween under conditions suitable to form an adhesive bond between the substrates; and
(c) optionally repeating steps (a) and (b);
wherein the hardener preferably comprises H-acidic functional groups selected from hydroxyl, primary or secondary amino, mercapto or carboxyl groups; more preferably is a polyol component; most preferably is a component comprising polyols that comprise two or more hydroxyl groups per molecule.

The invention further encompasses the use of the adhesive composition described herein as a laminating adhesive, preferably as an adhesive for laminating at least two films, in particular in food packaging applications, to achieve a primary aromatic amine migration limit of <10 ppb by weight.

"One or more", as used herein, relates to at least one and comprises 1, 2, 3, 4, 5, 6, 7, 8, 9 or more of the referenced species. Similarly, "at least one" means one or more, i.e. 1, 2, 3, 4, 5, 6, 7, 8, 9 or more. "At least one", as used herein in relation to any component, refers to the number of chemically different molecules, i.e. to the number of different types of the referenced species, but not to the total number of molecules. For example, "at least one polyol" means that at least one type of molecule falling within the definition for a polyol is used but that also two or more different molecule types falling within this definition can be present, but does not mean that only one molecule of said polyol is present.

"Laminated films" or "multilayer laminate", as used interchangeably herein, refers to a laminate of two or more film layers, typically plastic films or metal foils, which are bonded together by a laminating adhesive.

In the present application the term "film" refers to film-shaped substrates, i.e. thin, two-dimensional substrates such as plastic films, metal foils, textiles, paper and cardboard.

If reference is made herein to a molecular weight, this reference refers to the average number molecular weight Mₙ, if not explicitly stated otherwise. The number average molecular weight Mₙ can be calculated based on end group analysis (OH values according to DIN 53240) or can be determined by gel permeation chromatography according to DIN 55672, in particular DIN 55672-1 with THF as the eluent. If not stated otherwise, all given molecular weights are those determined by gel permeation chromatography according to DIN 55672-1. The weight average molecular weight M_{w} can be determined by GPC, as described for Mₙ.

If reference is made herein to OH values or the OH content, said values or content are typically those obtainable according to DIN 53240, with the resulting number indicating the milligrams of potassium hydroxide required to neutralize the acetic acid taken up on acetylation of one gram of a chemical substance that contains free hydroxyl groups.

NCO contents are determined by titration with dibutylamine according to Spiegelberger (*EN ISO* 11909).

All percentages given herein in relation to the compositions or formulations relate to weight % relative to the total weight of the respective composition or formula, if not explicitly stated otherwise.

"About" or "approximately" as used herein in connection with a numerical value refers to the numerical value ± 10%, preferably ± 5%."About 70 °C" thus relates to 70 ± 7, preferably 70 ± 3.5 °C. "NCO", as used herein, refers to the isocyanate group -N=C=O. "NCO-terminated", as used herein, relates to polyurethane prepolymers that contain at least one free NCO-group at one of their ends.

The primary aromatic amines (PAA) content or PAA migration limit refers to the amount of primary aromatic amines as determined according to the test method described in Example 1 below, if not explicitly stated otherwise.

The present invention is based on the inventors' surprising finding that adding a monofunctional compound comprising NCO-reactive functional groups to a polyurethane prepolymer, preferably a low-monomer polyurethane prepolymer, can further decrease the content of free isocyanate monomers and thus allow instant use of products that have been bonded using said prepolymer, typically in form of a laminating adhesive composition, for food packaging. This means that long waiting times to ensure complete curing and the concomitant reduction in free isocyanate monomer content can be obviated. It was particularly surprising, that it is possible to achieve a PAA migration limit of <10 ppb by weight in accordance with EC10/2011 (Commission Regulation (EU) No 10/2011) directly after lamination. Furthermore, it was surprisingly found, that the prepolymer composition according to the invention showed an improved adhesive performance, especially on printed films, as compared to essentially NCO free adhesives, such as silane-terminated polyurethane adhesives.

The multilayer laminate comprising an adhesive composition, which further comprises the polyurethane prepolymer of the invention is obtainable by reacting in step (a) at least one polyol with at least one polyisocyanate, wherein the at least one polyisocyanate is used in an amount such that NCO groups are present in molar excess relative to the hydroxyl groups of the at least one polyol to obtain a polyurethane prepolymer with free NCO groups, such as an NCO-terminated PU prepolymer.

The at least one polyol may comprise an individual polyol or preferably a mixture of two or more polyols. Suitable polyols are aliphatic and/or aromatic alcohols with 2 to 6, preferably 2 to 4, OH groups per molecule. The OH groups may be both primary and secondary.

Suitable aliphatic alcohols include, for example, ethylene glycol, propylene glycol, 1,4-butanediol, 1,5-pentanediol, 1,6-hexanediol, 1,7-heptanediol, 1,8-octanediol and the higher homologues or isomers thereof. More highly functional alcohols are likewise suitable, such as for example glycerol, trimethylolpropane, pentaerythritol and oligomeric ethers of the stated substances.

Reaction products of low molecular weight polyfunctional alcohols with alkylene oxides are preferably used as the polyol component. The alkylene oxides preferably have 2 to 4 C atoms. The reaction products of ethylene glycol, propylene glycol, the isomeric butanediols, hexanediol, 4,4-dihydroxydiphenylpropane or 4,4-dihydroxydiphenylmethane with ethylene oxide, propylene oxide or butylene oxide, or mixtures of two or more thereof are, for example, suitable. The reaction products of polyfunctional alcohols, such as glycerol, trimethylolethane or trimethylolpropane, pentaerythritol or sugar alcohols, or mixtures of two or more thereof, with the stated alkylene oxides to form polyether polyols are furthermore also suitable. Further polyols usual for the purposes of the invention are obtained by polymerization of tetrahydrofuran (poly-THF). Preferred are polyalkylene glycol homo- or copolymers, preferably polypropylene glycol homo- or copolymers, polyethylene glycol homo- or copolymers, polytetramethylene glycol homo- or copolymers, or polypropylene glycol/polyethylene glycol block copolymers. Particularly preferred are polypropylene glycol homopolymers.

Polyethers which have been modified by vinyl polymers are likewise suitable for use as the polyol component. Such products are for example obtainable by polymerizing styrene or acrylonitrile or a mixture thereof in the presence of polyethers.

Further suitable polyols are polyester polyols. Examples of these are polyester polyols, which are obtained by reacting low molecular weight alcohols, in particular ethylene glycol, diethylene glycol, neopentyl glycol, hexanediol, butanediol, propylene glycol, glycerol or trimethylolpropane with caprolactone.

Further suitable polyester polyols may be produced by polycondensation. Such polyester polyols preferably comprise the reaction products of polyfunctional, preferably difunctional alcohols and polyfunctional, preferably difunctional and/or trifunctional carboxylic acids or polycarboxylic anhydrides. Compounds suitable for producing such polyester polyols are in particular hexanediol, 1,4-hydroxymethylcyclohexane, 2-methyl-1,3-propanediol, 1,2,4-butanetriol, ethylene glycol, triethylene glycol, tetraethylene glycol, polyethylene glycol, dipropylene glycol, polypropylene glycol, dibutylene glycol and polybutylene glycol. Proportions of trifunctional alcohols may also be added.

The polycarboxylic acids may be aliphatic, cycloaliphatic, aromatic or heterocyclic or both. They may optionally be substituted, for example by alkyl groups, alkenyl groups, ether groups or halogens. Suitable polycarboxylic acids are for example succinic acid, adipic acid, suberic acid, azelaic acid, sebacic acid, phthalic acid, isophthalic acid, terephthalic acid, trimellitic acid, phthalic anhydride, tetrahydrophthalic anhydride, hexahydrophthalic anhydride, glutaric anhydride, maleic acid, maleic anhydride, fumaric acid, dimer fatty acid or trimer fatty acid or mixtures of two or more thereof. Proportions of tricarboxylic acids may optionally also be added.

It is, however, also possible to use polyester polyols of oleochemical origin. Such polyester polyols may for example be produced by complete ring opening of epoxidized triglycerides of a fat mixture containing at least in part an olefinically unsaturated fatty acid with one or more alcohols having 1 to 12 C atoms and subsequent partial transesterification of the triglyceride derivatives to yield alkyl ester polyols having 1 to 12 C atoms in the alkyl residue. Further suitable oleochemical polyols are castor oil and dimeric fatty alcohols (dimer diols) and the derivatives thereof. Castor oil is a triglyceride, wherein about 90 % of the fatty acid residues are ricinoleate (12-hydroxy-9-*cis-*octadecenoic acid), the remaining about 10 % predominantly being oleates and linoleates. Dimer diols can be produced by dimerization of unsaturated fatty alcohols with basic alkaline earth metal compounds at temperatures above 280° C. They may also be obtained by hydrogenation of dimeric fatty acids and/or esters thereof. Another method of producing dimer diols comprises dimerizing unsaturated alcohols in the presence of silica/alumina catalysts and basic alkali metal compounds.

Hydroxy-functional polybutadienes, as are for example available under the trade name poly-BD, may also be used as polyols for the compositions according to the invention.

Polyacetals are likewise suitable as the polyol component. Polyacetals are taken to mean compounds as are obtainable from glycols, for example diethylene glycol or hexanediol or mixtures thereof, with formaldehyde. Polyacetals which are usable for the purposes of the invention may likewise be obtained by polymerization of cyclic acetals.

Polycarbonates are furthermore suitable as polyols. Polycarbonates may, for example, be obtained by the reaction of diols, such as propylene glycol, 1,4-butanediol or 1,6-hexanediol, diethylene glycol, triethylene glycol or tetraethylene glycol or mixtures of two or more thereof with diaryl carbonates, for example diphenyl carbonate, or phosgene. Hydroxy esters of polylactones are likewise suitable. Another group of polyols may be OH-functional polyurethane polyols.

Polyacrylates bearing OH groups are likewise suitable as a polyol component. These polyacrylates may, for example, be obtained by the polymerization of ethylenically unsaturated monomers which bear an OH group. Ethylenically unsaturated carboxylic acids suitable for this purpose are for example acrylic acid, methacrylic acid, crotonic acid or maleic acid or the esters thereof with C₁ to C₂ alcohols. Corresponding esters bearing OH groups are for example 2-hydroxyethyl acrylate, 2-hydroxyethyl methacrylate, 2-hydroxypropyl acrylate, 2-hydroxypropyl methacrylate, 3-hydroxypropyl acrylate or 3-hydroxypropyl methacrylate or mixtures of two or more thereof.

The polyol and/or the polyol mixture used is preferably liquid at SATP conditions, i.e. at 25°C and a pressure of 1013 mbar.

The at least one polyisocyanate can be any suitable polyisocyanate, meaning that any compound which includes at least two isocyanate groups is within the contemplation of the present invention. It is preferable, however, that the polyisocyanate be a diisocyanate. Suitable diisocyanates include, without limitation, 1,5-naphthylene diisocyanate (NDI), 2,4'- or 4,4'-diphenylmethane diisocyanate (MDI), hydrogenated MDI (H12MDI), xylylene diisocyanate (XDI), tetramethylxylylene diisocyanate (TMXDI), di- and tetraalkylendiphenylmethandiisocyanat, 4,4'-dibenzyl, 1,3-or 1,4-phenylene diisocyanate, toluene diisocyanate (TDI), 1-methyl-2,4-diisocyanato-cyclohexane, 1,6-diisocyanato-2,2,4-trimethylhexane, 1,6-diisocyanato-2,4,4-trimethylhexane, 1-isocyanatomethyl-3-isocyanato-1,5,5-trimethylcyclohexane (IPDI), tetramethoxybutane-1,4-diisocyanate, butane-1,4-diisocyanate, hexane-1,6-diisocyanate (HDI), dicyclohexylmethane diisocyanate, cyclohexane-1,4-diisocyanate, ethylene diisocyanate, methylenetriphenyl triisocyanate (MIT), phthalic acid-bis-isocyanato-ethyl ester, trimethylhexamethylene diisocyanate, 1,4-diisocyanatobutane, 1,12-diisocyanatododecane and dimer fatty acid diisocyanate.

In various embodiments, the polyisocyanates used are selected from methylenediphenyl diisocyanate (MDI), toluene-2,4-diisocyanate (TDI), xylylene diisocyanate (XDI), hexamethylene diisocyanate (HDI), polymeric diphenylmethane diisocyanate (PMDI), isophorone diisocyanate (IPDI), methylene-4,4-bis(cyclohexyl)diisocyanate (H12MDI) and mixtures thereof. Suitable polyisocyanates are, for example, commercially available under the trademark name Desmodur^{®} from Bayer AG (DE).

The incorporation of small amounts of isocyanate with a functionality higher than two, in particular a triisocyanate, is also contemplated and may under certain circumstances even be advantageous. Such triisocyanates can act as cross-linkers. At least trifunctional isocyanates are polyisocyanates formed by trimerization or oligomerization of diisocyanates or by reaction of diisocyanates with low molecular weight polyfunctional hydroxyl or amino-containing compounds. Commercially available examples are trimerization of the isocyanates HDI, MDI, TDI, XDI, or IPDI or adducts of diisocyanates and low molecular weight triols such as trimethylolpropane or glycerol. Further examples are isocyanurates of hexamethylene diisocyanate (HDI) and the isocyanurate of isophorone diisocyanate (IPDI).

Aliphatic, cycloaliphatic or aromatic isocyanates may in principle be used, but aromatic isocyanates are particularly suitable.

As described above, in the polyurethane prepolymer-forming reaction the polyisocyanate is reacted in a concentration in excess of the stoichiometric concentration required to completely react with the hydroxyl groups. The excess used may include an OH/NCO equivalent ratio of 1:1.1 to 1:4, preferably 1:1.2 to 1:1.3. The OH and NCO contents may be determined by titration, as defined above.

In some embodiments, the at least one polyol is a mixture of polyols that are combined, optionally in combination with a solvent, such as ethyl acetate, and heated to about 30 to 95°C, for example about 40 to 75°C, optionally (in the absence of solvents) while stirring the mixture under vacuum to dry. After the mixing, the mixture temperature may be set to about 40°C to 50°C for the addition of the isocyanates, wherein the actual temperature is selected depending on the reactivity of the isocyanates added and considering the exothermic reaction that follows. The polyol mixture may subsequently be combined with at least one polyisocyanate in a reaction mixture to form the prepolymer. The prepolymer reaction usually occurs at elevated temperature, preferably in the range of between about 60 °C and about 95 °C, more preferably about 70-85 °C, over a period of between about 1 and about 24 hours. The reaction can be carried out in the presence of a catalyst that is added, preferably a tin-based catalyst, more preferably dimethyldineodecanoatetin, *such* as *Fomrez UL28.* In preferred embodiments of the invention, the reaction mixture does not comprise a catalyst.

The reaction continues until the free isocyanate content reaches or comes very close to the calculated value, as determined by standard titration with dibutylamine (Spiegelberger, EN ISO 11909).

Preferred values for the free isocyanate content in the prepolymer composition after step (a) are in the range between 1 and 15 % by weight, preferably 1 to 4 % by weight relative to the total amount of polyols and polyisocyanate in the mixture.

Generally, polyurethane prepolymers containing NCO groups may be produced in known manner from the above-mentioned polyols and polyisocyanates. Examples thereof are described in EP-A 951493 (US 6,515,164 B1), EP-A 1341832, EP-A 150444, EP-A 1456265, WO 2005/097861. Particularly preferred are low monomer PU prepolymers, such as those described in EP-A 951493 and EP-A 150444.

"Low monomer PU prepolymers", as used herein, relates to PU prepolymers or PU prepolymer compositions/formulations that contain less than 1 % by weight, preferably less than 0.5 % by weight free isocyanate monomers, such as the aromatic diisocyanates described above, as determined by GC or HPLC.

In line with the processes described in EP-A 951493 and EP-A 150444, step (a) of the methods described herein may comprise reacting the at least one polyol with a first and a second diisocyanate, wherein the first diisocyanate has at least one NCO group that is less reactive towards the hydroxyl groups of the at least one polyol than at least one of the NCO groups of the second diisocyanate. The reaction with the first diisocyanate and the second diisocyanate is preferably carried out consecutively, i.e. the first diisocyanate is added first and then the second diisocyanate is added. The time point at which the second diisocyanate is added may be determined on the basis of the free NCO content in the reaction mixture comprising the polyol and the first isocyanate, indicating the progress of the reaction, for example using IR spectroscopy or titration methods, in particular those described above. The first diisocyanate is preferably an asymmetric aromatic diisocyanate, such as 2,4-TDI, and/or the second diisocyanate is preferably a symmetric aromatic diisocyanate, such as 4,4'-MDI. "Less reactive", as used herein in relation to the NCO groups, refers to the lower reactivity of a given NCO group towards the hydroxyl groups of the polyol(s) compared to another NCO group. For example, the non-reacted NCO groups of 2,4-TDI (typically the NCO-group in the 2-position) after the reaction of TDI with the hydroxyl groups of the polyol(s) (in which the NCO-group in the 4-position predominantly reacts, as it is more reactive than the one in the 2-position) are less reactive than the NCO groups of added 4,4'-MDI. Accordingly, by way of example, when using an asymmetric diisocyanate that has two isocyanate groups with different reactivities, the one with the higher reactivity predominantly reacts with the hydroxyl groups of the polyols such that a product with a non-reacted, less reactive free isocyanate group is obtained. Due to its lesser reactivity, this non-reacted NCO group is less prone to react with the remaining free hydroxyl groups of the polyols. When adding a second, preferably symmetric, diisocyanate, this has NCO groups of higher reactivity than the remaining non-reacted NCO group of the first diisocyanate, so that now these NCO groups of the second diisocyanate react predominantly with the remaining free hydroxyl groups. This use of an asymmetric and a symmetric diisocyanate with different reactivities of the NCO groups is responsible for a low content of residual non-reacted diisocyanate monomers, as described in further detail in EP-A 951493 and EP-A 150444.

Accordingly, in such embodiments step (a) comprises a process in which in a first reaction step (step 1), a less reactive diisocyanate, preferably an asymmetric diisocyanate, such as toluene-2,4-diisocyanate (2,4-TDI), is reacted with at least one polyol, for example in an OH:NCO ratio of 4 to 0.55:1, in the absence of other diisocyanates and, after virtually all the NCO groups of relatively high reactivity have reacted off with some of the OH groups present, in case of 2,4-TDI the NCO-groups in the 4-position, a symmetrical dicyclic diisocyanate, such as 4,4'-MDI, which is more reactive than the remaining non-reacted NCO groups of the toluene-2,4-diisocyanate from reaction step 1 (typically the NCO group in the 2-position), is added in a second reaction step (step 2), optionally at elevated temperature and/or in the presence of typical catalysts.

The second diisocyanate, i.e. the symmetrical dicyclic diisocyanate, may be added
(a) in an equimolar quantity or in excess, based on free OH groups, or
(b) in a quantity of 5 to 80% by weight, based on the total quantity of diisocyanates in steps 1 and 2, or
(c) in an less than equimolar quantity, based on free OH groups, for example molar OH:NCO ratios of 1,1 to 12.

OH and NCO group contents can be determined as described above.

In various embodiments of such methods, the molar ratio of the NCO groups of the first diisocyanate to the NCO groups of the second diisocyanate is at least 6:1, preferably at least 10:1, more preferably at least 15:1.

With respect to further embodiments of such methods, reference is made to EP-A 0 951 493 and EP-A 0 150 444, in particular to the disclosure on pages 3-6 and 9-10 of EP-A 0 150 444 and pages 2, 4-7 of WO 98/29466 A1 (corresponding to EP-A 0 951 493).

The thus obtained PU prepolymer containing free isocyanate groups may in a further reaction step be reacted with further polyols, including triols or polyols of higher functionality. After this reaction, further polyisocyanates, such as triisocyanates or isocyanates of higher functionality may be added to the resulting prepolymer composition.

The obtained PU prepolymer are then in step (b) of the method combined with at least one compound having at least one H-acidic functional group containing an active hydrogen atom. The amount of H-acidic functional groups refers to the amount of active hydrogens atoms according to the Zerewitinoff test as described by Kohler et al. in Journal of the American Chemical Society, Vol. 49, p. 3181 (1927). The at least one H-acidic functional group XH is an NCO-reactive functional group, with X typically being N, O or S. It may be a primary amino, secondary amino, mercapto, carboxyl or a hydroxyl group, preferably a primary amino, secondary amino or mercapto group, most preferably a secondary amino group. In various preferred embodiments, the compound thus comprises at least one primary amino, secondary amino, mercapto, carboxyl or hydroxyl group as the at least one H-acidic functional group. In some embodiments, the H-acidic functional group may also be an acidic C-H group, such as present in malonate esters for example.

In preferred embodiments, the compound having at least one H-acidic functional group is monofunctional with respect to the at least one H-acidic functional group. This means that the compound having at least one H-acidic functional group comprises only one H-acidic functional group per molecule. According to the present invention, a primary amino group (NH₂) is considered to be two H-acidic functional groups (XH), whereas a secondary amino (NH), mercapto (SH), carboxyl (COOH) or hydroxyl group (OH) is considered to be only one H-acidic functional group. The at least one compound having at least one H-acidic functional group comprises at least one silane group, preferably alkoxysilane group. In various embodiments, such silane compounds are compounds of formula (I)

((R²)ₘ(R¹O)₃₋ₘSi-alkyl)ₒNu (I)

wherein
Nu is NH, NH₂, SH, COOH or OH, preferably NH, NH₂ or SH, more preferably NH or SH, most preferably NH;
R¹ is selected from H and C₁₋₂₀ alkyl, preferably C₁₋₄ alkyl, more preferably methyl and ethyl;
R² is selected from C₁₋₄ alkyl, preferably methyl and ethyl,
m is 0, 1 or 2, preferably 0 or 1, more preferably 0;
alkyl is linear or branched C₁₋₆ alkylenyl or C₃₋₆ cycloalkylenyl, preferably -(CH₂)ₙ- , wherein n is an integer from 1 to 6, preferably 1-4, more preferably 1, 2 or 3; and
wherein if Nu is NH₂, SH or OH o is 1 and if Nu is NH o is 2.

Preferred are aminosilanes that include one or more alkoxysilane groups, preferably trialkoxysilane groups. Particularly preferred are bis(alkoxysilylalkyl)amines.

Exemplary compounds that have an alkoxysilane group and can be used in the context of the invention include, but are not limited to 3-aminopropyltrimethoxysilane (AMMO), 3-aminopropyltriethoxysilane (AMEO), 3-aminopropylmethyldimethoxysilane, 3-aminopropylmethyldiethoxysilane, N-(2-aminoethyl)-3-aminopropyltrimethoxysilane (DAMO), N-(2-aminoethyl)-3-aminopropyltriethoxysilane, N-(2-aminoethyl)-3-aminopropylmethyldimethoxysilane, N-(2-aminoethyl)-3-amino-propylmethyldiethoxysilane, N,N-di(2-aminoethyl)-3-aminopropyltrimethoxysilane, N,N-di(2-aminoethyl)-3-aminopropyltriethoxysilane, N,N-di(2-aminoethyl)-3-aminopropylmethyldimethoxysilane, N,N-di(2-aminoethyl)-3-aminopropylmethyldiethoxysilane, N-(2-aminoethyl)-N'-(2-aminoethyl)-3-aminopropyltrimethoxysilane, N-(2-aminoethyl)-N'-(2-aminoethyl)-3-aminopropyltriethoxysilane, N-(2-aminoethyl)-N'-(2-aminoethyl)-3-aminopropylmethyldimethoxysilane, N-(2-aminoethyl)-N'-(2-aminoethyl)-3-aminopropylmethyldiethoxysilane), bis(triethoxysilylpropyl)amine, bis(trimethoxysilylpropyl)amine, N-(2-aminobutyl)-3-aminopropyltriethoxysilane, N-(2-aminobutyl)-3-aminopropyltrimethoxysilane, N-(n-butyl)-3-aminopropyltrimethoxysilane, N-(n-butyl)-3-aminopropyltriethoxysilane, and mixtures thereof.

Particularly preferred is bis(3-(triethoxysilyl)propyl)amine, which is commercially available under the tradename Dynasylan^{®} 1122 (Evonik Industries) and Silquest^{®} Y-11699 (Momentive Performance Materials Inc.). Alkoxysilane compounds are advantageous in that they may act as adhesion promoters and may increase the thermal stability and chemical resistance of the adhesive.

The at least one compound having at least one H-acidic functional group is added in an amount such that the molar ratio of NCO groups to H-acidic functional groups (NCO:XH ratio = NCO/XH equivalent ratio, with X typically being N, O or S) is 2 to 15, preferably 2.5 to 10, more preferably 3 to 8.

By adding the at least one compound having at least one H-acidic functional group that is reactive towards NCO groups of the PU prepolymer, the free monomer isocyanate content can be reduced, as the free monomer NCO groups react with the NCO-reactive groups of the added compound. In addition the prepolymer is partially endcapped, as the free NCO-groups react with the at least one compound having at least one H-acidic functional group. It is particularly preferred to use alkoxysilane group-containing compounds as thus the prepolymers are partially endcapped with the alkoxysilane groups. Since the residual free isocyanate monomers cannot be excluded from reacting with the H-acidic functional group, a reduction in the total monomer content is obtained while partially end-capping the prepolymer with the at least one compound having at least one H-acidic functional group. In various embodiments, the free monomer may comprise NCO-groups which are more reactive towards the H-acidic groups than the NCO-groups of the polyurethane prepolymer. This can further help to reduce the free isocyanate monomer content in the prepolymer composition.

The polyurethane prepolymers obtained after step (b) typically have an "ultralow" monomeric polyisocyanate content of <0.1%, preferably <0.05% by weight as determined by GC or HPLC. In various embodiments, where TDI and MDI are used as described above, the isocyanate monomer content is about 0.05 % TDI and <0.01 % MDI and <0.01 of other isocyanate monomers.

The resultant polyurethane prepolymers have isocyanate groups which are reactive with OH groups or water. The free NCO content after step (b) is typically in the range of between 1 and 5 % by weight, preferably between 1 and 4 % by weight. The polyurethane prepolymers preferably have a molar mass of 500 to 20,000 g/mol (number average molecular weight, determinable by gel permeation chromatography, GPC). The viscosity of the prepolymers at the adhesive application temperature in a temperature range from 20° C to 50° C should be in the range from 500 to 40,000 mPa·s as determined by the Brookfield test method (ISO 2555).

In some embodiments, triisocyanates or isocyanates of higher functionality may be added to the resulting prepolymer composition after step (b). Triisocyanates or isocyanates of higher functionality, such as oligomeric or polymeric MDI, are typically less prone to migration compared to monomeric diisocyanates, such as MDI or TDI. Thus, by addition of triisocyanates or isocyanates of higher functionality the NCO content can be increased, which in turn may improve the adhesive performance, while the content of free monomeric diisocyanates can be kept low.

It is also possible, that the adhesive compositions formulated using the prepolymer compositions described herein can contain compounds having functional groups, which can react with alcohols. It is preferred in this case that the reaction between alcohol and reactive group of the selected compound is an addition reaction. Preferably, no low molecular weight substances should be released in this reaction. Particularly suitable as a functional group are anhydrides of organic carboxylic acids. These can be monomeric carboxylic acid anhydrides, particularly those that are solid at 30°C, such as e.g. maleic anhydride (MA), phthalic anhydride, trimesic anhydride or derivatives of such compounds. Oligomers of compounds containing more than one organic anhydride group can also be used. A particular embodiment uses polymers with a molecular weight greater than 1000 g/mol that have anhydride groups. Suitable polymers are known, particularly those with MA groups. These can be incorporated into the corresponding polymers by copolymerization, but it is also possible for MA to be grafted onto polymers. Examples of suitable copolymers are copolymers of MA with styrene, vinyl acetate or (meth)acrylates. Examples of copolymers that can be grafted with MA are base polymers of polypropylene, polystyrene, polyesters or polybutadienes. These can be grafted by known methods after their production in a polymer-analogous reaction with MA. The content of MA in the suitable polymers may differ, being from 3 mol % up to approx. 60 mol % of MA. According to the invention, it is advantageous if higher ratios of MA are present in the polymer, in particular from 10 to 55 mol %. It is particularly preferred to employ MA-styrene copolymers, which have a content of between 20 and 55 mol % MA and which are preferably solid.

The quantity of the polymers or oligomers should be between 1 and 20 % by weight, based on the adhesive composition, in particular between 2 and 15 % by weight. The quantity can be selected so that the quantity of anhydride groups corresponds to the quantity of alkoxy groups in the adhesive according to the invention. An excess can also be used. Any low molecular weight substances carrying nucleophilic groups that may additionally be present, such as amine-containing compounds, can also react with this component.

The polyurethane laminating adhesives described herein are either 1K or 2K polyurethane adhesives, preferably 2K adhesives. The 1K polyurethane adhesives comprise the PU prepolymer with free NCO groups herein without a further hardener, while the 2-component polyurethane adhesives comprise the PU prepolymer with free NCO groups as described herein in combination with a further component comprising compounds containing at least two H-acidic functional groups (hardener). H-acidic functional groups include hydroxyl, primary or secondary amino, mercapto or carboxyl groups. This further component is preferably a polyol component, i.e. a component comprising polyols that comprise two or more hydroxyl groups per molecule.

1K PU adhesives generally contain one or more of the NCO-functional polyurethane prepolymers described herein. These usually cross-link in the presence of water, which is provided as part of the substrate to be bonded or from the air. 2K PU adhesives contain a binder component that contains the above-described PU prepolymers and a hardener component. Immediately before use, the two components are mixed and the resulting mixture has to be processed before it is fully cured. The hardener component typically comprises compounds containing at least two H-acidic functional groups, as defined above. The curing of the polyurethane adhesives of the invention is therefore either based on the reaction of NCO groups with reactive H-acidic functional groups (2K systems) or the reaction of the NCO groups with moisture from the applied adhesive, the substrate, or the environment to form urea groups (1K systems). If the at least one compound having at least one H-acidic functional group of step (b) comprises at least one silane group, the curing of the adhesive can further be supported by reaction of silane groups with moisture from the applied adhesive, the substrate or the environment to form siloxane groups. To accelerate such reactions, catalysts can be present in the adhesive, such as amine or tin catalysts.

In some embodiments, the hardener comprises an OH-terminated polyester hardener. Such polyester-based hardeners are known in the art and are, for example obtainable by reacting, in a polycondensation reaction, dicarboxylic acids with polyols. The dicarboxylic acids may be aliphatic, cycloaliphatic or aromatic and/or their derivatives such as anhydrides, esters or acid chlorides. Specific examples of these are succinic acid, glutaric acid, adipic acid, pimelic acid, suberic acid, azelaic acid or sebacic acid, phthalic acid, isophthalic acid, terephthalic acid, trimellitic acid, phthalic acid anhydride, tetrahydrophthalic acid anhydride, glutaric acid anhydride, maleic acid, maleic acid anhydride, fumaric acid, dimeric fatty acids and dimethyl terephthalate. Examples of suitable polyols are monoethylene glycol, 1,2-propanediol, 1,3-propanediol, 1,4-butanediol, 3-methylpentane-1,5-diol, neopentyl glycol (2,2-dimethyl-1,3-propanediol), 1,6-hexanediol, 1,8-octaneglycol, cyclohexanedimethanol, 2-methylpropane-1,3-diol, diethyleneglycol, triethyleneglycol, tetraethyleneglycol, polyethyleneglycol, dipropyleneglycol, tripropyleneglycol, tetrapropyleneglycol, polypropyleneglycol, dibutyleneglycol, tributyleneglycol, tetrabutyleneglycol and polybutyleneglycol. Alternatively, they may be obtained by ring-opening polymerization of cyclic esters, preferably ε-caprolactone.

In preferred embodiments, the polyesters are polyesters of adipic acid, isophthalic acid, pimelic acid, suberic acid, azelaic acid and/or sebacic acid with any one or more of neopentyl glycol, 1,4-butane diol, diethyleneglycol, 1,6-hexanediol and 1,2-propanediol. In preferred embodiments, the polyester hardener comprises at least one hydroxyl-terminated polyester of adipic acid and/or isophthalic acid and any one or more of neopentyl glycol, diethyleneglycol, 1,6-hexane diol and 1,2-propanediol.

In other embodiments, the hardener component may comprise one or more monomeric polyols. Suitable polyols are aliphatic and / or aromatic alcohols having from 2 to 6, preferably 2 to 4 OH groups per molecule. The OH groups may be both primary and secondary. Suitable aliphatic alcohols include, for example, ethylene glycol, propylene glycol, 1,4-butanediol, 1,5-pentanediol, 1,6-hexanediol, 1,7-heptanediol, 1,8-octanediol and higher homologs or isomers. Also suitable are higher alcohols such as glycerol, trimethylolpropane, pentaerythritol. Oligomeric ethers of said substances can also be employed.

Other suitable hardener components include polyacetals, OH-functional polyurethane polyols. It is also possible to use any two or more of the above hydroxyl-functional hardener components in combination.

The polyurethane adhesive composition may preferably be formulated as laminating adhesive composition. The polyurethane adhesive compositions may be formulated with likewise per se known further auxiliary substances to form laminating adhesives. These include, without limitation and by way of example only, resins (tackifiers), catalysts, for example based on organometallic compounds or tertiary amines, such as tin compounds or DABCO, stabilizers, crosslinking agents, viscosity modifiers, fillers, pigments, plasticizers, water scavengers and antioxidants. In the embodiment of a 2K composition these compounds may be comprised in the binder and/or in the hardener component.

The polyurethane adhesives of the invention are liquid at application temperatures, so that they can be applied in the process for the production of multilayer films in liquid form.

The polyurethane adhesives of the invention are liquid at room temperature.

The adhesives described herein may contain solvents or may be solvent-free. Suitable solvents are conventional organic solvents that can evaporate at the temperature up to 130° C, in particular having a boiling point below 100° C. The solvents can be selected from the group of the aliphatic hydrocarbons, aromatic hydrocarbons, ketones or esters. The solvents are used for lowering and adjusting the viscosity. The proportion of solvents can vary within wide limits, for example from 19 to 75 wt%, relative to the total weight of the adhesive. It is also possible that the adhesives used are free of solvents, i.e. do not contain more than 5 wt%, preferably not more than 1 wt%, most preferably not more than 0.1 wt% of organic solvents. However, adhesives containing solvents are preferred.

The adhesives described herein may be applied to the substrates to be bonded, especially the films, with all conventional devices for adhesive application and with all known application processes, for example, by spraying, coating, roll applicators. After application, the substrates to be bonded are bonded together in a known manner. It may be practical to apply the adhesive at elevated temperature, such as up to 120°C, to achieve a better application and a faster crosslinking reaction. However, the adhesives described herein show good curing properties already at room temperature or only at slightly elevated temperatures such as 40°C.

The prepolymers and adhesive compositions as disclosed herein are suitable as such or in the form of solutions in organic solvents for bonding plastics, metals, paper and cardboard, but especially for laminating textiles, plastic films, metal foils, preferably aluminium foils. Conventional hardeners, for example polyhydric alcohols of relatively high molecular weight may be added (two-component systems) and surfaces of defined moisture content may be directly bonded using the products according to the invention. Film laminates produced with the products according to the invention are characterized by high processing safety during manufacturing at elevated temperature. This may possibly be attributable to the greatly reduced content of migratable low molecular weight products in the prepolymers. In addition, the prepolymers according to the invention may also be used as extrusion, printing and metallizing primers and for heat sealing.

In various embodiments, the polyurethane laminating adhesives described herein can be used in a process to bond well-known films based on polymers such as polypropylene (PP), oriented polypropylene (OPP), polyethylene (PE), polyesters, such as polyethylene terephthalate (PET), cellophane, polyamide, such as nylon, in particular oriented polyamide (OPA) or biaxially oriented polyamide (BOPA), as well as metal foils, in particular aluminum foils, and also paper, cardboard and textiles.

For forming a multilayer laminate the adhesive is applied to one or both, preferably only one, of the films to be bonded. The films may be pretreated and/or printed films, such as ink-printed films. The application can be done at elevated temperature in order to achieve a thin and even coating. A second film of the same or different material is then laminated, typically under pressure. By repeating the laminating process, laminates consisting of more than two layers can be obtained. The adhesive cures and a multilayer film in which both films are bonded to each other is obtained. The curing may also occur at elevated temperature.

Accordingly, there are also disclosed methods of bonding two or more substrates selected from the group consisting of plastic surface articles, metals, textiles, paper and cardboard comprising:
(a) applying the prepolymer compositions or adhesive compositions described herein alone or in a mixture with a hardener to the surface of at least one of the substrates to be bonded; and
(b) contacting the surfaces of the substrates to be bonded together with the adhesive composition therebetween under conditions suitable to form an adhesive bond between the substrates; and
(c) in case more than two substrates are to be bonded repeating steps (a) and (b).

As detailed above, at least one of the substrates, preferably two or more, is a film-shaped substrate, preferably selected from the group consisting of plastic films and metal foils.

The invention also encompasses the multilayer laminates preferably two-layer laminates in which two film layers are bonded to each other by the above-described adhesives. The multilayer laminates may be laminates for food packaging applications.

Further, the invention is also directed to the use of the above-described adhesives as laminating adhesives, in particular for laminating at least two film-shaped substrates, even more particularly for food packaging applications. The film-shaped substrates may be those defined above in connection with the disclosed methods.

It is preferred to use the laminating adhesive to achieve a PAA migration limit of <10 ppb by weight in accordance with EC10/2011 (Commission Regulation (EU) No 10/2011) directly after lamination. It is of course to be understood that all embodiments disclosed above in connection with the prepolymer compositions of the invention are similarly applicable to the adhesive compositions, methods, laminates and uses of the invention and vice versa.

The invention is further illustrated by the following examples, without being limited thereto. Therein, the indicated amounts are by weight, unless otherwise indicated.

### Examples

### Example 1 (according to the invention)

In a three-necked flask equipped with a stirrer, thermometer and a condenser, 1067.4 g of PES 218 (OH value 133 mg KOH/g), 673.58 g of PES 231 (OH value 108 mg KOH/g), 350.3 g of polypropylene glycol (OH value 113 mg KOH/g), 350.0 g of polypropylene glycol (OH value 236 mg KOH/g), and 873.7 g of ethyl acetate were mixed with 735.2 g of toluene-2,4-diisocyanate, and the resulting mixture was heated at 50°C. Due to the exothermic reaction the temperature rose and was kept at 80°C until the NCO content as measured by titration was only 3.85 % by weight. After addition of 4,4'-diphenylmethane diisocyanate (4,4'-MDI), the reaction mixture was stirred for 3 hours at 80°C, after which an NCO content of 3.05% was measured. 249.2 g of PES 231 (OH value 108 mg KOH/g) and 18 g trimethylolpropane (OH value 1254 mg KOH/g) were added and the solution stirred at the same temperature until an NCO content of 2.08 % by weight. 716 g ethyl acetate and 243.2 g Desmodur^{®} L75 (polyisocyanate based on 2,4-TDI or triisocyanate based on TDI, NCO value 13,3 % by weight) were added until an NCO content of 2,2 % by weight was measured.

The prepolymer was then reacted at 40°C with Dynasylan^{®} 1122 (bis(3-(triethoxysilyl)propyl)amine) at an NCO/NH equivalent ratio of equal to 7.3:1. The resulting product had an NCO content of 1.94 % by weight, a viscosity of 1510 mPa·s (measured three days after production, Brookfield/spindle 3/30 rpm), final 70% solids, and an isocyanate monomer concentration of 0.05 % by weight 2,4-TDI and <0.01 % by weight 4,4'-MDI. Other isocyanate monomers were not detectable (<0.01 % by weight).

The modified prepolymer was utilized as a 1- or 2-K adhesive in combination with Liofol^{®} hardener LA6152 (Henkel AG & Co. KGaA; OH component; solid content: 100 % by weight) at a mixing ratio of 25:1 (NCO/OH equivalent ratio of 1.65:1) to laminate different film structures at a dry coating weight of 3.5 g/m².

Laminate adhesion was tested using a universal tensile testing machine with a synchronous recorder. The force range was between 10 and 50 N and was adjusted according to the expected adhesion level. 15 mm wide stripes were prepared using a stripe cutter. Before the stripes were clamped, they were slightly separated. The peeling rate was 100 mm/min, the peeling angle 90° and the peel length 5 to 10 cm according to the range of variation. The results are expressed as laminate adhesion (bond strength - BS) in N/15mm and the separation pattern is visually evaluated (% of ink transfer).

**Table 1: Performance on printed OPP/OPP Ink binders: NC-PU (gravure printed)**

| Color | BS - 1 day | BS - 14 days | BS - 28 days |
|---|---|---|---|
| Blue | 2.95 / 5% ink transfer | 2.2 / 100% ink transfer | 1.59 / co-ex tear |
| blue-white | 2.22 / 0 % ink transfer | 3.82 / co-ex tear | 2.45 / co-ex tear |
| White | 2.19 / 0 % ink transfer | 1.78/ 100 % ink transfer | 2.63 / co-ex tear |

**Table 2: Performance on printed OPP/OPP Ink binders: NC-PU (flexo printed)**

| Color | BS - 1 day | BS - 14 days | BS - 28 days |
|---|---|---|---|
| Blue | 3.25 / co-ex tear | 4.97 / co-ex tear | 4.41 / co-ex tear |
| blue-white | 1.99 / 0 % ink transfer | 4.35 / co-ex tear | 3.57 / 90% ink transfer |
| White | 1.87 / co-ex tear | 5.99 / co-ex tear | 2.09 / co-ex tear |

**Table 3: Performance on printed PET/PE Ink binders: PUR (flexo printed)**

| Color | BS - 1 day | BS - 14 days | BS - 28 days |
|---|---|---|---|
| Blue | 2.35 / 0% ink transfer | 3.07 / PET tear | 3.26 / PET tear |
| blue-white | 2.23 / 0 % ink transfer | 3.94 / PET tear | 4.42 / PET tear |
| White | 2.52 / 0 % ink transfer | 1.33 / 100 % ink transfer | 1.59 / 100% ink transfer |

A freshly laminated OPA/PE structure coated with 3.8 g/m² of the prepolymer as a 1K adhesive was instantly evaluated for migration of primary aromatic amines (PAAs). The migration test was performed by placing the laminates in migration cells and covering 1 dm² (from the PE side) with 100 ml of 3 % by weight acetic acid at 70°C for 1 hour. The migration solutions were then analyzed via HPLC with a PDA detector after enrichment to detect 2,4-TDA, 2,6-TDA, 2,2'-MDA, 2,4'-MDA and 4,4'-MDA. The test result was <10 ppb by weight PAA (compliant with EC/10/2011 on plastic materials and articles intended to come into contact with food) even if the PU prepolymer was used without additional hardener.

Related to the migrated surface, the following amounts were determined for the 0 hours migration solution at 70°C (in µg/dm²)

| | | | | |
|---|---|---|---|---|
| 2,6-TDA | 2,4-TDA | 4,4'-MDA | 2,4'-MDA | 2,2'-MDA |
| 0.32 | <0.15 | <0.15 | <0.15 | <0.18 |

### Example 2 (comparative example)

44 parts of polyester PE 230 were dissolved in 9.25 parts ethyl acetate and then reacted with 5 parts 2,4-TDI at 80°C. 29.75 parts of ethyl acetate and 4.5 parts of a mixture of dibutylamine and bis(3-(triethoxysilyl)propyl)amine were then added until no further isocyanate groups were present.

To this prepolymer, 7.5 parts of a styrene copolymer containing app. 50 % by weight maleic anhydride building blocks was added and the mixture homogenized. The resulting final product had a viscosity of 1060 mPa·s (Brookfield/spindle 3) at 20°C and a solids content of 56 % by weight.

The prepolymer was then used to laminate different film structures at a dry coating weight of 2.7 g/m². The performance was tested as described in Example 1.

**Table 4: Performance on printed OPP/OPP Ink binders: NC-PU (gravure printed)**

| Color | BS - 1 day | BS - 14 days | BS - 28 days |
|---|---|---|---|
| Blue | 0.58 / 60% ink transfer | 0.47 / 80 % ink transfer | 0.42 / 80 % ink transfer |
| blue-white | 0.98 / 90 % ink transfer | 0.49 / 95% ink transfer | 0.22 / 90% ink transfer |
| White | 1.9/50 % ink transfer | 0.86 / 95% ink transfer | 0.39 / 100% ink transfer |

**Table 5: Performance on printed OPP/OPP Ink binders: NC-PU (flexo printed)**

| Color | BS - 1 day | BS - 14 days | BS - 28 days |
|---|---|---|---|
| Blue | 1.09 / 90% ink transfer | 1.25 / 5 % ink transfer | 0.74 / 0 % ink transfer |
| blue-white | 1.15 / 100 % ink transfer | 0.96 / 100% ink transfer | 1.18 / 80% ink transfer |
| White | 1.9 / 0 % ink transfer | 2.39 / co-ex tear | 1.19 / 100% ink transfer |

**Table 6: Performance on printed PET/PE Ink binders: PUR (flexo printed)**

| Color | BS - 1 day | BS - 14 days | BS - 28 days |
|---|---|---|---|
| Blue | 1.3 / 90% ink transfer | 0.96 / 100% ink transfer | 0.66 / 100 % ink transfer |
| blue-white | 4.21 / PET tear | 2.39 / PET tear | 1.6 / 90% ink transfer |
| White | 3.11 / 0 % ink transfer | 0.95/ 100% ink transfer | 1.38/ 100% ink transfer |

As the adhesive does not contain any remaining isocyanate groups, it is instantly compliant with EC/10/2011. However, it shows a lowered adhesive performance.

### Example 3 (comparative example)

LOCTITE^{®} Liofol^{®} LA 3966-21 (Henkel AG & Co. KGaA; NCO component; solid content: 80 % by weight; solvent: ethylacetate) with hardener LOCTITE^{®} Liofol^{®} LA 6152 at a mix ratio of 20:1 (NCO/OH index 2.13) was utilized as a laminating adhesive at 3.5 g/m². Bis(3-(triethoxysilyl)propyl)amine was not employed.

None of the laminates showed <10 ppb by weight PAA instantly after lamination and it required more than 24 hours cure at room temperature to reach compliance with EC/10/2011.

The performance was tested as described in Example 1.

**Table 7: Performance on printed OPP/OPP Ink binders: NC-PU (gravure printed)**

| Color | BS - 1 day | BS - 14 days | BS - 28 days |
|---|---|---|---|
| Blue | 2.04 / 70% ink transfer | 2.1 / 100 % ink transfer | 1.52 / co-ex tear |
| blue-white | 4.24 / 0 % ink transfer | 1.76 / 100% ink transfer | 1.33 / 100% ink transfer |
| White | 4.35 / 0 % ink transfer | 1.26 / 100% ink transfer | 1.27 / co-ex tear |

**Table 8: Performance on printed OPP/OPP Ink binders: NC-PU (flexo printed)**

| Color | BS - 1 day | BS - 14 days | BS - 28 days |
|---|---|---|---|
| Blue | 2.43 / co-ex tear | 3.04 / co-ex tear | 2.45 / co-ex tear |
| blue-white | 1.81 / 0 % ink transfer | 2.53 / co-ex tear | 2.4 / co-ex tear |
| White | 1.73 / 0 % ink transfer | 2.71 / co-ex tear | 1.03 / 100% ink transfer |

**Table 9: Performance on printed PET/PE Ink binders: PUR (flexo printed)**

| Color | BS - 1 day | BS - 14 days | BS - 28 days |
|---|---|---|---|
| Blue | 2.05 / 0% ink transfer | 4.19 / PET tear | 3.75/ PET tear |
| blue-white | 2.06 / 0 % ink transfer | 2.88 / PET tear | 1.43 / 100% ink transfer |
| White | 2.22 / 0 % ink transfer | 1.29 / 100% ink transfer | 1.22 / 100% ink transfer |

In sum, the examples show that only the prepolymer composition according to Example 1 showed a good adhesive performance and also led to a laminate which is instantly reaches compliance with EC/10/2011. I.e. a residual PAA content of below 10 ppb by weight is achieved directly after lamination, such that a direct use of the laminate for food packaging after lamination is possible. The prepolymers according to Example 2, even though being instantly food compliant, lacked in adhesive performance. In contrast, the NCO component according to Example 3 provided a good adhesive performance but led to higher residual PAA contents that did not allow a direct use of the laminates for food packaging after lamination.

## Claims

1. Multilayer laminate comprising two or more substrates selected from the group consisting of plastic surface articles, metals, textiles, paper and cardboard,
comprising an adhesive composition, which further comprises a prepolymer composition comprising at least one polyurethane prepolymer containing free isocyanate groups, said polyurethane prepolymer containing less than 1% by weight free isocyanate monomers and being obtainable by
(a) reacting at least one polyol with at least one polyisocyanate, wherein the at least one polyisocyanate is used in an amount such that the NCO groups are present in molar excess relative to the hydroxyl groups of the at least one polyol to obtain a polyurethane prepolymer containing free isocyanate groups; and
(b) adding at least one compound having at least one H-acidic functional group, wherein at least one compound having at least one H-acidic functional group comprises at least one silane group, to the polyurethane prepolymer containing free isocyanate groups of step (a) in an amount such that the molar ratio of the free isocyanate groups to H-acidic functional groups (NCO:XH ratio) is 2 to 15,
wherein the adhesive composition is liquid at room temperature and wherein at least one of the two or more substrates is a film-shaped substrate.

2. Multilayer laminate according to claim 1, wherein the at least one compound having at least one H-acidic functional group
(a) comprises at least one primary amino, secondary amino, mercapto, carboxyl, hydroxyl or acidic C-H group as the at least one H-acidic functional group, in particular at least one primary amino, secondary amino or mercapto group; and/or
(b) has only one H-acidic functional group.

3. Multilayer laminate according to claim 2, wherein the at least one compound having at least one H-acidic functional group is a silane of formula I
((R²)ₘ(R¹O)₃₋ₘSi-alkyl)ₒNu (I)
wherein
Nu is NH, NH₂, SH, COOH or OH, preferably NH, NH₂ or SH, more preferably NH or SH, most preferably NH;
R¹ is selected from H and C₁₋₂₀ alkyl, preferably C₁₋₄ alkyl, more preferably methyl and ethyl;
R² is selected from C₁₋₄ alkyl, preferably methyl and ethyl,
m is 0, 1 or 2, preferably 0 or 1, more preferably 0;
alkyl is a linear or branched C₁₋₆ alkylenyl or C₃₋₆ cycloalkylenyl, preferably -(CH₂)ₙ- , wherein n is an integer from 1 to 6, preferably 1 to 4, more preferably 1, 2 or 3; and
wherein if Nu is NH₂, SH or OH o is 1 and if Nu is NH o is 2.

4. Multilayer laminate according to claim 3, wherein the at least one compound having at least one H-acidic functional group is an aminosilane selected from the group consisting of 3-aminopropyltrimethoxysilane (AMMO), 3-aminopropyltriethoxysilane (AMEO), 3-aminopropylmethyldimethoxysilane, 3-aminopropylmethyldiethoxysilane, N-(2-aminoethyl)-3-aminopropyltrimethoxysilane (DAMO), N-(2-aminoethyl)-3-aminopropyltriethoxysilane, N-(2-aminoethyl)-3-aminopropylmethyldimethoxysilane, N-(2-aminoethyl)-3-aminopropylmethyldiethoxysilane, N,N-di(2-aminoethyl)-3-aminopropyltrimethoxysilane, N,N-di(2-aminoethyl)-3-aminopropyltriethoxysilane, N,N-di(2-aminoethyl)-3-aminopropylmethyldimethoxysilane, N,N-di(2-aminoethyl)-3-aminopropylmethyldiethoxysilane, N-(2-aminoethyl)-N'-(2-aminoethyl)-3-aminopropyltrimethoxysilane, N-(2-aminoethyl)-N'-(2-aminoethyl)-3-aminopropyltriethoxysilane, N-(2-aminoethyl)-N'-(2-aminoethyl)-3-aminopropylmethyldimethoxysilane, N-(2-aminoethyl)-N'-(2-aminoethyl)-3-aminopropylmethyldiethoxysilane), bis(triethoxysilylpropyl)amine, bis(trimethoxysilylpropyl)amine, N-(2-aminobutyl)-3-aminopropyltriethoxysilane, N-(2-aminobutyl)-3-aminopropyltrimethoxysilane, N-(n-butyl)-3-aminopropyltrimethoxysilane, N-(n-butyl)-3-aminopropyltriethoxysilane, and mixtures thereof.

5. Multilayer laminate according to any one of claims 1 to 4, wherein step (a) comprises reacting the at least one polyol with a first and a second diisocyanate, wherein the first diisocyanate has first NCO groups and the second diisocyanate has second NCO groups, wherein at least one of the first NCO groups is less reactive towards the hydroxyl groups of the at least one polyol than at least one of the second NCO groups.

6. Multilayer laminate according to claim 5, wherein
(a) the molar ratio of the NCO groups of the first diisocyanate to the NCO groups of the second diisocyanate is at least 6:1, preferably at least 10:1, more preferably at least 15:1; and/or
(b) the first diisocyanate is an asymmetric diisocyanate, preferably 2,4-TDI; and/or
(c) the second diisocyanate is a symmetric diisocyanate, preferably 4,4'-MDI.

7. Multilayer laminate according to claims 1 to 6, wherein the adhesive composition further comprises at least one polymer having anhydride functional groups, preferably a maleic anhydride copolymer or a maleic anhydride graft polymer.

8. The multilayer laminate according to claims 1 to 7, wherein the laminate is
(a) a two-layer laminate; and/or
(b) a laminate for food packaging applications.

9. Use of an adhesive composition defined in claim 1 to achieve a primary aromatic amine migration limit of <10 ppb by weight.

## Patentansprüche

1. Mehrschichtiges Laminat, umfassend zwei oder mehr Substrate, die aus der Gruppe ausgewählt sind, bestehend aus Kunststoffoberflächenerzeugnissen, Metallen, Textilien, Papier und Karton, umfassend eine Klebstoffzusammensetzung, die ferner eine Präpolymerzusammensetzung umfasst, umfassend mindestens ein Polyurethanpräpolymer, das freie Isocyanatgruppen enthält, wobei das Polyurethanpräpolymer weniger als 1 Gew.-% freie Isocyanatmonomere enthält und erhältlich ist durch
(a) Reagieren mindestens eines Polyols mit mindestens einem Polyisocyanat, wobei das mindestens eine Polyisocyanat in einer Menge verwendet wird, so dass die NCO-Gruppen in einem molaren Überschuss relativ zu den Hydroxylgruppen des mindestens einen Polyols vorliegen, um ein Polyurethanpräpolymer zu erhalten, das freie Isocyanatgruppen enthält; und
(b) Zugeben mindestens einer Verbindung, die mindestens eine H-acide funktionelle Gruppe aufweist, wobei mindestens eine Verbindung, die mindestens eine H-acide funktionelle Gruppe aufweist, mindestens eine Silangruppe umfasst, zu dem Polyurethanpräpolymer, das freie Isocyanatgruppen enthält, von Schritt (a), in einer Menge, so dass das Molverhältnis von den freien Isocyanatgruppen zu H-aciden funktionellen Gruppen (NCO : XH-Verhältnis) 2 bis 15 beträgt,
wobei die Klebstoffzusammensetzung bei Raumtemperatur flüssig ist und wobei mindestens eines der zwei oder mehr Substrate ein folienförmiges Substrat ist.

2. Mehrschichtiges Laminat nach Anspruch 1, wobei die mindestens eine Verbindung, die mindestens eine H-acide funktionelle Gruppe aufweist,
(a) mindestens eine primäre Amino-, sekundäre Amino-, Mercapto-, Carboxyl-, Hydroxyl- oder acide C-H-Gruppe als die mindestens eine H-acide funktionelle Gruppe umfasst, insbesondere mindestens eine primäre Amino-, sekundäre Amino- oder Mercaptogruppe; und/oder
(b) nur eine H-acide funktionelle Gruppe aufweist.

3. Mehrschichtiges Laminat nach Anspruch 2, wobei die mindestens eine Verbindung, die mindestens eine H-acide funktionellen Gruppe aufweist, ein Silan von Formel I ist
((R²)ₘ(R¹O)₃₋ₘSi-Alkyl)₀Nu (I)
wobei
Nu NH, NH₂, SH, COOH oder OH, bevorzugt NH, NH₂ oder SH, stärker bevorzugt NH oder SH, am stärksten bevorzugt NH ist;
R¹ aus H und C_{1 - 20}-Alkyl, vorzugsweise C₁₋₄-Alkyl, stärker bevorzugt Methyl und Ethyl ausgewählt ist;
R² aus C₁₋₄-Alkyl, vorzugsweise Methyl und Ethyl ausgewählt ist,
m 0, 1 oder 2, vorzugsweise 0 oder 1, stärker bevorzugt 0 ist;
Alkyl ein lineares oder verzweigtes C₁₋₆-Alkylen oder C₃₋₆-Cycloalkylenyl, vorzugsweise -(CH₂)ₙ- ist, wobei n eine ganze Zahl von 1 bis 6, vorzugsweise 1 bis 4, stärker bevorzugt 1, 2 oder 3 ist; und
wobei, wenn Nu NH₂, SH oder OH ist, o 1 ist, und wenn Nu NH ist, o 2 ist.

4. Mehrschichtiges Laminat nach Anspruch 3, wobei die mindestens eine Verbindung, die mindestens eine H-acide funktionelle Gruppe aufweist, ein Aminosilan ist, das aus der Gruppe ausgewählt ist, bestehend aus 3-Aminopropyltrimethoxysilan (AMMO), 3-Aminopropyltriethoxysilan (AMEO), 3-Aminopropylmethyldimethoxysilan, 3-Aminopropylmethyldiethoxysilan, N-(2-Aminoethyl)-3-aminopropyltrimethoxysilan (DAMO), N-(2-Aminoethyl)-3-aminopropyltriethoxysilan, N-(2-Aminoethyl)-3-aminopropylmethyldimethoxysilan, N-(2-Aminoethyl)-3-aminopropylmethyldiethoxysilan, N,N-Di(2-aminoethyl)-3-aminopropyltrimethoxysilan, N,N-Di(2-aminoethyl)-3-aminopropyltriethoxysilan, N,N-Di(2-aminoethyl)-3-aminopropylmethyldimethoxysilan, N,N-Di(2-Aminoethyl)-3-aminopropylmethyldiethoxysilan, N-(2-Aminoethyl)-N'-(2-aminoethyl)-3-aminopropyltrimethoxysilan, N-(2-Aminoethyl)-N'-(2-aminoethyl)-3-aminopropyltriethoxysilan, N-(2-Aminoethyl)-N'-(2-aminoethyl)-3-aminopropylmethyldimethoxysilan, N-(2-Aminoethyl)-N'-(2-aminoethyl)-3-aminopropylmethyldiethoxysilan), Bis(triethoxysilylpropyl)amin, Bis(trimethoxysilylpropyl)amin, N-(2-Aminobutyl)-3-aminopropyltriethoxysilan, N-(2-Aminobutyl)-3-aminopropyltrimethoxysilan, N-(n-Butyl)-3-aminopropyltrimethoxysilan, N-(n-Butyl)-3-aminopropyltriethoxysilan und Gemischen davon.

5. Mehrschichtiges Laminat nach einem der Ansprüche 1 bis 4, wobei Schritt (a) das Reagieren des mindestens einen Polyols mit einem ersten und einem zweiten Diisocyanat umfasst, wobei das erste Diisocyanat erste NCO-Gruppen aufweist und das zweite Diisocyanat zweite NCO-Gruppen aufweist, wobei mindestens eine der ersten NCO-Gruppen gegenüber den Hydroxylgruppen des mindestens einen Polyols weniger reaktiv als mindestens eine der zweiten NCO-Gruppen ist.

6. Mehrschichtiges Laminat nach Anspruch 5, wobei
(a) das Molverhältnis von den NCO-Gruppen des ersten Diisocyanats zu den NCO-Gruppen des zweiten Diisocyanats mindestens 6 : 1, vorzugsweise mindestens 10 : 1, stärker bevorzugt mindestens 15 : 1 ist; und/oder
(b) das erste Diisocyanat ein asymmetrisches Diisocyanat, vorzugsweise 2,4-TDI ist; und/oder
(c) das zweite Diisocyanat ein symmetrisches Diisocyanat, vorzugsweise 4,4'-MDI ist.

7. Mehrschichtiges Laminat nach den Ansprüchen 1 bis 6, wobei die Klebstoffzusammensetzung ferner mindestens ein Polymer, das anhydridfunktionelle Gruppen aufweist, vorzugsweise ein Maleinsäureanhydrid-Copolymer oder ein Maleinsäureanhydrid-Pfropfpolymer, umfasst.

8. Mehrschichtiges Laminat nach den Ansprüchen 1 bis 7, wobei das Laminat ist
(a) ein zweischichtiges Laminat; und/oder
(b) ein Laminat für Lebensmittelverpackungsanwendungen.

9. Verwendung einer Klebstoffzusammensetzung, die in Anspruch 1 definiert ist, um eine Migrationsgrenze von primären aromatischen Aminen von < 10 Gew.-ppb zu erreichen.

## Revendications

1. Stratifié multicouche comprenant deux substrats ou plus choisis dans le groupe constitué d'articles de surface en plastique, de métaux, de textiles, de papier et de carton, comprenant une composition adhésive, qui comprend en outre une composition de prépolymère comprenant au moins un prépolymère de polyuréthane contenant des groupes isocyanate libres, ledit prépolymère de polyuréthane contenant moins de 1 % en poids de monomères isocyanate libres et pouvant être obtenu par
(a) la réaction d'au moins un polyol avec au moins un polyisocyanate, dans lequel l'au moins un polyisocyanate est utilisé en une quantité telle que les groupes NCO sont présents en excès molaire par rapport aux groupes hydroxyle de l'au moins un polyol pour obtenir un prépolymère de polyuréthane contenant des groupes isocyanate libres ; et
(b) l'ajout d'au moins un composé ayant au moins un groupe fonctionnel à H acide, dans lequel au moins un composé ayant au moins un groupe fonctionnel à H acide comprend au moins un groupe silane, au prépolymère de polyuréthane contenant des groupes isocyanate libres de l'étape (a) en une quantité telle que le rapport molaire des groupes isocyanate libres aux groupes fonctionnels à H acide (rapport NCO:XH) va de 2 à 15,
dans lequel la composition adhésive est liquide à la température ambiante et dans lequel au moins un des deux substrats ou plus est un substrat sous forme de film.

2. Stratifié multicouche selon la revendication 1, dans lequel l'au moins un composé ayant au moins un groupe fonctionnel à H acide
(a) comprend au moins un groupe amino primaire, amino secondaire, mercapto, carboxyle, hydroxyle ou C-H acide en guise d'au moins un groupe fonctionnel à H acide, en particulier au moins un groupe amino primaire, amino secondaire ou mercapto ; et/ou
(b) a seulement un groupe fonctionnel à H acide.

3. Stratifié multicouche selon la revendication 2, dans lequel l'au moins un composé ayant au moins un groupe fonctionnel à H acide est un silane de formule I
((R²)ₘ(R¹O)₃₋ₘSi-alkyl)ₒNu (I)
dans lequel
Nu est NH, NH₂, SH, COOH ou OH, de préférence NH, NH₂ ou SH, plus préférablement NH ou SH, le plus préférablement NH ;
R¹ est choisi parmi H et alkyle en C₁ à ₂₀, de préférence alkyle en C_{1 à 4}, plus préférablement méthyle et éthyle ;
R² est choisi parmi alkyle en C_{1 à 4}, de préférence méthyle et éthyle,
m vaut 0, 1 ou 2, de préférence 0 ou 1, plus préférablement 0 ;
alkyl est un alkylényle en C_{1 à 6} linéaire ou ramifié ou un cycloalkylényle en C_{3 à 6}, de préférence -(CH₂)ₙ-, dans lequel n est un nombre entier allant de 1 à 6, de préférence 1 à 4, plus préférablement 1, 2 ou 3 ; et
dans lequel si Nu est NH₂, SH ou OH o vaut 1 et si Nu est NH o vaut 2.

4. Stratifié multicouche selon la revendication 3, dans lequel l'au moins un composé ayant au moins un groupe fonctionnel à H acide est un aminosilane choisi dans le groupe constitué de 3-aminopropyltriméthoxysilane (AMMO), 3-aminopropyltriéthoxysilane (AMEO), 3- aminopropylméthyldiméthoxysilane, 3-aminopropylméthyldiéthoxysilane, N-(2-aminoéthyl)-3-aminopropyltriméthoxysilane (DAMO), N-(2-aminoéthyl)-3-aminopropyltriéthoxysilane, N-(2-aminoéthyl)-3-aminopropylméthyldiméthoxysilane, N-(2-aminoéthyl)-3-aminopropylméthyldiéthoxysilane, N,N-di(2-aminoéthyl)-3-aminopropyltriméthoxysilane, N,N-di(2-aminoéthyl)-3-aminopropyltriéthoxysilane, N,N-di(2-aminoéthyl)-3-aminopropylméthyldiméthoxysilane, N,N-di(2-aminoéthyl)-3-aminopropylméthyldiéthoxysilane, N-(2-aminoéthyl)-N'-(2-aminoéthyl)-3-aminopropyltriméthoxysilane, N-(2-aminoéthyl)-N'-(2-aminoéthyl)-3-aminopropyltriéthoxysilane, N-(2- aminoéthyl)-N'-(2-aminoéthyl)-3-aminopropylméthyldiméthoxysilane, N-(2-aminoéthyl)-N'-(2-aminoéthyl)-3-aminopropylméthyldiéthoxysilane), bis(triéthoxysilylpropyl)amine, bis(triméthoxysilylpropyl)amine, N-(2-aminobutyl)-3-aminopropyltriéthoxysilane, N-(2-aminobutyl)-3-aminopropyltriméthoxysilane, N-(n-butyl)-3-aminopropyltriméthoxysilane, N-(n-butyl)-3-aminopropyltriéthoxysilane, et mélanges de ceux-ci.

5. Stratifié multicouche selon l'une quelconque des revendications 1 à 4, dans lequel l'étape (a) comprend la réaction de l'au moins un polyol avec un premier et un deuxième diisocyanate, dans lequel le premier diisocyanate a des premiers groupes NCO et le deuxième diisocyanate a des deuxièmes groupes NCO, dans lequel au moins un des premiers groupes NCO est moins réactif vis-à-vis des groupes hydroxyle de l'au moins un polyol qu'au moins un des deuxièmes groupes NCO.

6. Stratifié multicouche selon la revendication 5, dans lequel
(a) le rapport molaire des groupes NCO du premier diisocyanate aux groupes NCO du deuxième diisocyanate vaut au moins 6:1, de préférence au moins 10:1, plus préférablement au moins 15:1 ; et/ou
(b) le premier diisocyanate est un diisocyanate asymétrique, de préférence 2,4-TDI ; et/ou
(c) le deuxième diisocyanate est un diisocyanate symétrique, de préférence 4,4'-MDI.

7. Stratifié multicouche selon les revendications 1 à 6, dans lequel la composition adhésive comprend en outre au moins un polymère ayant des groupes fonctionnels anhydride, de préférence un copolymère d'anhydride maléique ou un polymère greffé d'anhydride maléique.

8. Stratifié multicouche selon les revendications 1 à 7, dans lequel le stratifié est
(a) un stratifié à deux couches ; et/ou
(b) un stratifié pour des applications d'emballage alimentaire.

9. Utilisation d'une composition adhésive définie dans la revendication 1 pour obtenir une limite de migration d'amine aromatique primaire <10 parties par milliard en poids.
